# DEMANDE DE BREVET EUROPEEN

(11) **EP 2 400 752 A1**
(43) Date de publication de la demande: **28.12.2011**
(21) Numéro de dépôt: 11169566.4
(22) Date de dépôt: 10.06.2011
(51) Int. Cl.: H04N 7/173, G06F 17/30, G06K 9/20, H04N 5/00, H04N 7/24, H04N 21/81, H04N 21/41

(54) **Système de capture de TV widget**

(30) Priorité: 23.06.2010 FR 1054976
(71) Demandeur: Alcatel Lucent, 75007 Paris (FR)
(72) Inventeur: Marilly, Emmanuel, 91620 Nozay (FR); Andrieu, Xavier, 91620 Nozay (FR)
(74) Mandataire: Shamsaei Far, Hassan

(57) **Abrégé**

Système de capture d'un TV widget (1) présenté sur un moyen d'affichage externe (2), comprenant un terminal utilisateur (4), un moyen d'affichage utilisateur (3), un réseau de communication (5), une application logicielle (6, 7) apte à :

- lire/capturer un identifiant dudit TV widget (1) présenté sur le moyen d'affichage externe (2),
- identifier la plateforme fournisseur (8) dudit TV widget (1),
- requérir auprès de ladite plateforme fournisseur (8) identifiée le TV widget (1) identifié, et
- rendre disponible ledit TV widget (1) pour le moyen d'affichage utilisateur (3).

## Description

La présente invention concerne la gestion de TV widget. Un widget est un mot nouveau recouvrant un concept nouveau. Son origine probable est une contraction des mots window (de l'anglais fenêtre) et gadget. Un widget peut être défini comme un petit programme (gadget informatique). Un TV widget possède de plus une représentation graphique, visible en mode vidéo ou télévision (TV), sensiblement en permanence. Un TV widget permet de réaliser une tâche dédiée particulière d'intérêt fréquent. A titre d'exemple un TV widget peut indiquer la météo, rechercher un mot clé sur le web, proposer une fonction de calculette, servir de pense-bête (post-it en anglais), proposer une fonction de traducteur, etc. Un TV widget est généralement interactif en ce qu'il est possible d'interagir avec lui (par exemple en cliquant dessus avec une souris ou en le sélectionnant avec une télécommande) pour solliciter un de ses services ou encore pour le configurer.

Un TV widget peut être employé sur un moyen d'affichage ne disposant typiquement pas d'une interface évoluée de type clavier, comme par exemple un téléviseur, une set-top-box, une console de jeu ou encore un téléphone mobile bas de gamme. Un TV widget peut cependant être utilisé sur un tel moyen d'affichage. La partie graphique du TV widget est affichée à l'écran et un utilisateur peut interagir avec le TV widget, afin de déclencher un de ses services, par exemple, au moyen de la télécommande du moyen d'affichage.

Du fait de l'absence de clavier suffisant et/ou d'interface homme machine évoluée, les possibilités d'interaction entre un utilisateur et un TV widget sont très limitées. Il est par exemple impossible à un utilisateur d'un TV widget de le transférer vers un autre moyen d'affichage à l'attention d'un ami ou d'un correspondant sur un réseau social. Il n'existe actuellement aucun moyen de transférer un TV widget depuis un moyen d'affichage vers un autre.

La présente invention remédie à ces différents inconvénients en proposant à un utilisateur voyant un TV widget sur un moyen d'affichage externe, de le capturer afin de l'importer, à son usage, vers son moyen d'affichage utilisateur.

L'invention a pour objet un système de capture d'un TV widget présenté sur un moyen d'affichage externe, caractérisé en ce qu'il comprend un terminal utilisateur, un moyen d'affichage utilisateur, un réseau de communication, et une application logicielle apte à :
- lire/capturer un identifiant du TV widget présenté sur le moyen d'affichage externe,
- identifier la plateforme fournisseur dudit TV widget,
- requérir auprès de ladite plateforme fournisseur identifiée le TV widget identifié, et
- rendre disponible ledit TV widget pour le moyen d'affichage utilisateur.

Selon une autre caractéristique de l'invention, l'application logicielle comprend une application principale embarquée sur le terminal utilisateur et une application interface embarquée sur le réseau de communication apte à communiquer avec l'application principale.

Selon une autre caractéristique de l'invention, le terminal utilisateur est un téléphone portable, et l'application principale et l'application interface communiquent via un réseau téléphonique sans fil.

Selon une autre caractéristique de l'invention, l'identifiant est un identifiant sonore et le terminal utilisateur comprend un moyen de lecture sonore apte à lire ledit identifiant sonore.

Selon une autre caractéristique de l'invention, l'identifiant est un code barre et le terminal utilisateur comprend un lecteur de code barre apte à lire ledit code barre.

Selon une autre caractéristique de l'invention, l'identifiant est un identifiant graphique et le terminal utilisateur comprend un moyen de lecture d'image apte à lire ledit identifiant graphique.

Selon une autre caractéristique de l'invention, l'identifiant graphique est l'apparence graphique standard du TV widget.

Selon une autre caractéristique de l'invention, l'identifiant est un identifiant présenté par le TV widget à la demande.

D'autres caractéristiques, détails et avantages de l'invention ressortiront plus clairement de la description détaillée donnée ci-après à titre indicatif en relation avec des dessins sur lesquels :
- la figure 1 présente un synoptique du système selon l'invention,
- la figure 2 illustre un mode de réalisation de l'application logicielle associée au système.

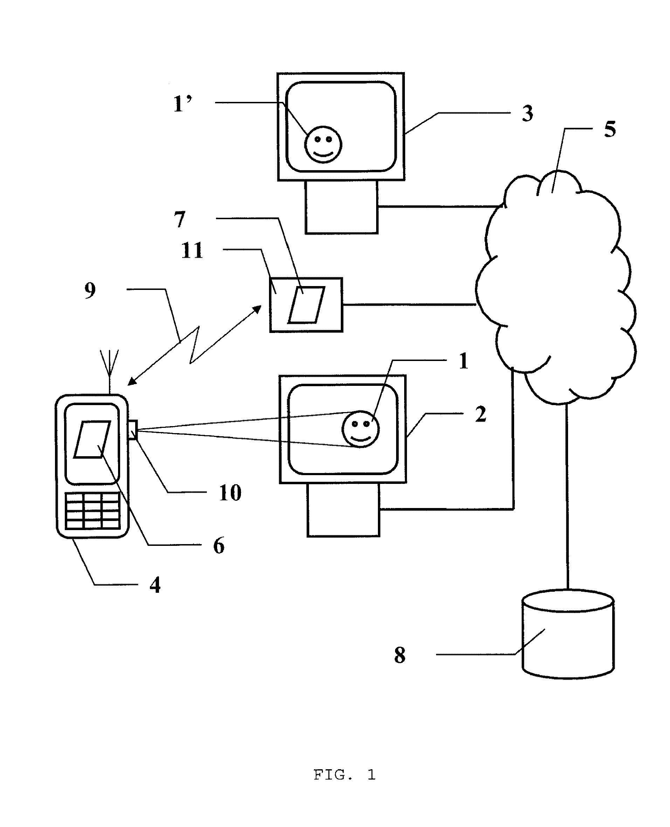

Selon la figure 1, est représenté un exemple d'un système selon l'invention et son environnement en cours d'utilisation. Le TV widget 1 est initialement présenté sur un moyen d'affichage 2 externe au système et au déroulement de la capture. Un moyen d'affichage 2, 3 s'entend ici d'un moyen de restitution principalement visuelle et/ou sonore capable de présenter des contenus multimédias tel des programmes vidéo et capable d'accueillir un TV widget 1, de le présenter et d'assurer la gestion de l'exécution de ses services. Un moyen d'affichage 2, 3 peut ainsi être un ordinateur, un téléviseur, une set-top-box avec un écran (téléviseur adapté à internet), une console de jeu avec un écran ou encore un téléphone mobile, etc. Ledit moyen d'affichage intègre des moyens de traitement informatique plus ou moins étendus.

Le scénario type adressé par l'invention est le suivant. Alice et Bob regardent ensemble le moyen d'affichage 3 d'Alice. Sur ce moyen d'affichage 3 (externe), Bob, qui est ici l'utilisateur du système, remarque un TV widget 1 intéressant et souhaite l'importer dans son propre environnement multimédia. Aussi Bob souhaite transférer ledit TV widget 1 pour le rapatrier dans son propre moyen d'affichage 3 dénommé moyen d'affichage utilisateur 3. Pour cela, selon l'invention, Bob utilise le système et particulièrement un terminal utilisateur 4 et réalise une capture dudit TV widget 1.

Pour cela, Bob utilise un terminal utilisateur 4 qui réalise ladite capture du TV widget au moyen d'un identifiant. A partir de cet identifiant le système assure une mise à disposition dudit TV widget 1 dans l'environnement de Bob. Le système de capture de TV widget 1 selon l'invention comprend un moyen d'affichage utilisateur 3 destinataire, un terminal utilisateur 4, tout deux associés à un même utilisateur, un réseau de communication 5, une application logicielle 6, 7.

Le réseau 5 est une infrastructure matérielle et logicielle. Il est figuré par un nuage 5 sur la figure 1 et comprends encore les unités de traitement, les câblages et les logiciels nécessaires aux communications avec le moyen d'affichage utilisateur 3, avec le moyen d'affichage externe 2, avec au moins une plateforme fournisseur de TV widget 8, ainsi que, le cas échéant, à une interface 11 avec un réseau téléphonique 9.

L'application logicielle 6, 7 est apte à :
- lire/capturer un identifiant dudit TV widget 1 présenté sur le moyen d'affichage externe 2,
- identifier la plateforme fournisseur 8 dudit TV widget 1, en fonction dudit identifiant,
- requérir auprès de ladite plateforme fournisseur 8 identifiée le TV widget 1 identifié, et
- rendre disponible ledit TV widget 1 pour le moyen d'affichage utilisateur 3.

S'agissant d'un réseau de communication 5, l'application logicielle peut s'exécuter sur toute unité de traitement, en une ou plusieurs parties réparties ou centralisées sur le réseau 5. Cependant afin de faciliter la capture de TV widget 1, le terminal utilisateur 4 qui est le principal acteur de cette capture est avantageusement portable, par exemple par l'utilisateur. Aussi, de manière logique, l'application logicielle peut être fonctionnellement découpée en au moins deux parties dont une réside sur ledit terminal utilisateur 4 et l'autre réside sur le réseau de communication 5.

Selon ce mode de réalisation, l'application logicielle comprend une application principale 6 embarquée et s'exécutant sur le terminal utilisateur 4. Cette application principale 6 est principalement en charge de la lecture/capture d'un identifiant du TV widget 1 présenté sur le moyen d'affichage externe 2. Aussi, le terminal utilisateur 4, étant mobile, peut avantageusement être placé dans une position avantageuse pour réaliser la lecture de l'identificateur du TV widget 1. L'application logicielle comprend encore une application interface 7 embarquée et s'exécutant sur le réseau de communication 5. Cette application d'interface 7 est principalement en charge de l'interface entre le réseau 5 et l'application principale 6 et le terminal utilisateur 4. Les autres opérations, à savoir : identification de la plateforme fournisseur 8 du TV widget 1, requête auprès de ladite plateforme fournisseur 8 identifiée du TV widget 1 identifié, mise à disposition du TV widget 1 pour le moyen d'affichage utilisateur 3, peuvent indifféremment être réalisées par l'application principale 6, l'application interface 7 ou les deux en coopération.

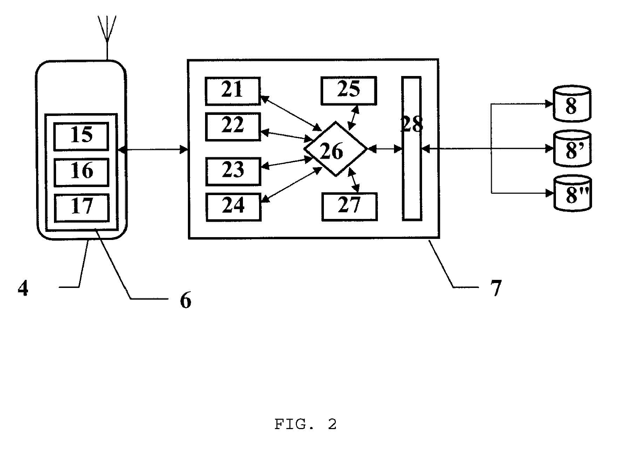

En se référant à la figure 2, va maintenant être décrit un mode de réalisation illustratif de l'application logicielle. L'application logicielle comprend une application principale 6 s'exécutant sur le terminal utilisateur 4 et une application interface 7. L'application interface 7 comprend des interfaces avec l'application principale 6 et avec des plateformes fournisseur 8, 8', 8" de TV widget.

L'application logicielle assure les fonctionnalités suivantes : identification, édition, transfert, partage, échange, gestion des droits numériques d'accès (DRM), affichage à la demande et gestion de la bibliothèque de TV widgets de l'utilisateur.

Pour cela l'application interface 7 comprend les modules suivants :
- Accès plateforme 28 : comprend les services d'interface (APIs) avec les différentes plateformes fournisseur 8, 8', 8" de TV widget. L'application interface propose une fonctionnalité de capture d'un TV widget depuis une plateforme fournisseur 8 spécifique et doit donc être en mesure de s'interfacer avec les différentes plateformes fournisseur 8, 8', 8". Ceci est réalisé via des services d'interfaces (APIs).
- Gestionnaire de TV widget 26 : en charge de la gestion de l'application interface 7. Il s'agit du module principal de l'application. Par exemple, le module gestionnaire 26 reçoit une requête de l'application principale 6 pour obtenir un TV widget. Cette requête est accompagnée d'un identifiant de TV widget. Le gestionnaire interroge la base de données pour obtenir toutes les informations concernant le TV widget (plateforme fournisseur, adresse du TV widget, localisation, APIs, etc), requiert auprès du module accès plateforme 28 l'obtention du TV widget identifié, puis le stocke dans la bibliothèque de TV widgets personnelle de l'utilisateur.
- Profil utilisateur 21 : est un module en charge de gérer le profil utilisateur. Ce module permet d'accéder à toutes les informations concernant l'utilisateur pouvant être utiles pour l'application logicielle. Ces informations comprennent par exemple : l'identificateur du moyen d'affichage utilisateur 3, sa localisation, son profil, ses droits, sa plateforme fournisseur associée habituelle, etc.
- Base de données 27 : est un module gérant une base de données sur les TV widgets. Elle peut être interrogée par tous les modules de l'application logicielle pour obtenir des informations sur un TV widget en fonction d'un identifiant de TV widget, telles que sa plateforme fournisseur, son adresse, ses caractéristiques, ses compatibilités, etc. Ces informations sont par exemple utiles pour récupérer physiquement le TV widget auprès de sa plateforme fournisseur 8 ou pour le partager/échanger.
- Bibliothèque 24 : est un module en charge de la gestion de la bibliothèque personnelle de TV widget d'un utilisateur. Disposant d'une bibliothèque de TV widgets, l'utilisateur peut les éditer, les supprimer, les transférer, les échanger, les partager.
- Partage 23 : est un module en charge de la gestion des échanges et/ou partages de TV widgets.
- Identification 22 : est un module permettant d'identifier un TV widget. Une telle identification d'un TV widget est réalisée à partir de ce qui est lu par le terminal utilisateur 4. Dans le cas où une photo est prise du TV widget 1, le module identification 22 réalise une opération de reconnaissance de forme de la photo pour extraire un identifiant du TV widget 1.
- Droits 25 : est un module de gestion des droits d'accès numériques (Digital Rights Management ou DRM). Ce module est en charge de la gestion des droits d'accès durant les opérations d'obtention, de transfert, de partage, d'échange, d'édition, de personnalisation et d'utilisation d'un TV widget. Il s'interface avec un module correspondant de la plateforme fournisseur 8. Ainsi un TV widget peut être partagé avec des droits limités. Par exemple Alice capture un TV widget et veut l'afficher sur son moyen d'affichage. Alice peut n'obtenir que des droits limités, tels que définis par le propriétaire du TV widget, et ne lui donnant ainsi accès qu'a certaines fonctionnalités du TV widget.

De même l'application principale 6 comprend les modules suivants :
- Interface homme machine 15 : comprend les services d'interface homme machine avec le terminal utilisateur 4 afin de permettre un dialogue avec l'utilisateur, concernant l'application logicielle.
- Capture 16 : est un module assurant la fonction de capture proprement dite. Ainsi lorsque ladite capture réalise une lecture de code barre, ce module 16 est en charge de gérer le lecteur de code barre ou la prise de la photo dudit code.
- Gestion 17 : est un module en charge de la gestion des TV widgets. Il permet de réaliser des fonctions d'édition, de transfert, de partage, d'échange ou encore de personnalisation d'un widget capturé.

L'organisation logicielle présentée ci-dessus est purement indicative. Il est possible de réaliser un découpage fonctionnel différent et par exemple de placer un module ou une fonctionnalité de l'application principale 6 dans l'application interface 7 et réciproquement.

La lecture proprement dite de l'identifiant du TV widget 1 est réalisée par l'application principale 6 en utilisant les ressources du terminal utilisateur 4. Une analyse éventuelle du contenu lu pour en extraire un identifiant peut ensuite être réalisée par l'une ou l'autre des applications 6, 7.

A partir de l'identifiant lu, le TV widget 1 souhaité est identifié par le système. L'identification de la plateforme fournisseur 8 supportant ledit TV widget 1 identifié est réalisée par tout moyen connu. L'identifiant de TV widget peut contenir un identifiant de la plateforme 8. Le système peut aussi interroger ladite plateforme fournisseur 8, ou tout autre serveur permettant d'indiquer une association TV widget/plateforme 8. Le système peut encore interroger le moyen d'affichage externe 2 afin de connaître la plateforme 8 qui le fournit.

Une fois la plateforme fournisseur 8 de TV widget identifiée, le système est en mesure de requérir ledit TV widget 1 auprès de cette plateforme 8. Selon un mode de réalisation l'identifiant du TV widget comprend ou est associé à une adresse du TV widget 1 sur la plateforme 8. Cette requête peut permettre au système de récupérer le TV widget 1, sous forme du TV widget 1 complet lui-même ou d'une adresse de ce TV widget 1 pour en transmettre une copie l'au moyen d'affichage utilisateur 3 destinataire. Alternativement cette requête peut directement instruire la plateforme 8 de mettre une copie 1' du TV widget 1 à disposition du moyen d'affichage utilisateur 3. La mise à disposition peut encore se faire par simple transfert d'une adresse.

Il est à noter que l'utilisateur destinataire, auquel sont associés le terminal utilisateur 4 et le moyen d'affichage 3 utilisateur, est identifié par le terminal utilisateur 4 utilisé. Ainsi, le système identifie l'utilisateur au moyen du terminal utilisateur 4 qui initie le processus de capture de TV widget 1. Par association, le système connaît le moyen d'affichage utilisateur 3 associé, ou son adresse, et sait à quel moyen d'affichage 3 le TV widget 1' doit être mis à disposition.

Il est à noter encore que l'origine du TV widget 1, à savoir le moyen d'affichage externe 2, d'où est lu le TV widget 1, ou l'utilisateur éventuel associé à ce moyen d'affichage externe 2, n'est pas connue du système. Cependant cette connaissance n'est pas nécessaire au bon déroulement d'une capture de TV widget 1.

Une fois le TV widget 1 capturé et mis à disposition de l'utilisateur dans son environnement personnel, l'utilisateur peut interagir avec ledit TV widget 1. Il peut ainsi le présenter et l'utiliser sur son moyen d'affichage 3 et en déclencher les services. Il peut encore si son environnement le permet, le transmettre à son tour par exemple en autorisant sa capture. Il peut encore, sur la base de l'identifiant capturé, le modifier, le personnaliser ou encore le diffuser vers d'autres supports, vers des correspondant ou vers un réseau social, en transmettant l'identifiant. Ceci peut être réalisé soit depuis le moyen d'affichage utilisateur 3 par exemple via le réseau de communication 5, soit directement depuis le terminal utilisateur 4 via le réseau téléphonique 9 ou via le réseau de communication 5.

En terme de gestion de TV widget, le terminal utilisateur 4, dans la mesure où il comporte une interface homme machine plus complète, tel un clavier complet ou encore un écran tactile, peut permettre des opérations de gestion, modification, transfert du TV widget, plus étendues que celles accessibles depuis le seul moyen d'affichage 3 utilisateur.

Avantageusement, afin de pouvoir se placer au plus près du moyen d'affichage externe 2 lors de la lecture/capture, le terminal utilisateur 4 est portatif. Selon un mode de réalisation préférentiel le téléphone portable de l'utilisateur peut être employé. Un téléphone portable est avantageusement associé à un unique utilisateur, est portatif et dispose de moyens de lecture, de traitement et de communication adaptés à la réalisation d'une capture de TV widget 1. Une fois lu l'identifiant du TV widget 1 sur le moyen d'affichage externe, le téléphone portable et l'application principale 6 qu'il embarque utilisent avec profit les moyens de communication téléphonique sans fil disponibles pour communiquer avec l'application interface 7, par exemple pour lui transmettre l'identifiant dudit TV widget 1 identifié. Le réseau 5 comprend alors une passerelle 11 entre le réseau téléphonique figuré par une flèche 9 et le réseau de communication 5.

Un tel téléphone portable est ici avantageusement un téléphone haut de gamme (PDA, smartphone, etc) disposant notamment d'interfaces homme machine plus complètes, afin de pouvoir offrir des fonctions étendues de gestion de TV widget.

Un identifiant, quel que soit son mode, est caractéristique d'un TV widget 1. Il est unique pour un TV widget 1 donné et permet, le cas échéant par un processus de reconnaissance, ou encore par consultation d'une table de correspondance, d'obtenir toute information d'identification, de caractérisation, de localisation, etc, nécessaire à la gestion du TV widget 1. Plusieurs modes sont envisageables pour présenter un identifiant pour un TV widget 1, avec des moyens correspondants pour lire l'identifiant.

Selon un premier mode, un identifiant peut être sonore. Un identifiant sonore est un son, une phrase sonore, un jingle, généralement court, émis par le TV widget 1 et caractéristique de celui-ci. Selon ce mode sonore, le terminal utilisateur 4 comprend un moyen de lecture 10 apte à lire ledit identifiant sonore, tel un microphone. Le moyen de lecture 10 peu encore comprendre un moyen d'analyse et de traitement du signal lu par le microphone afin de reconnaître l'identifiant pour identifier le TV widget 1. Alternativement, ce traitement de reconnaissance peut être déporté par exemple dans l'application interface 7.

Un TV widget 1 présente a minima une représentation graphique sur le moyen d'affichage externe 2. Selon un mode de réalisation préférentiel l'identifiant emploie le mode graphique. Sur le mode graphique il est possible d'envisager plusieurs types d'identifiant.

Selon un mode de réalisation, l'identifiant graphique est un code barre affiché par le TV widget 1. Le code barre peut être un code 1D ou 2D selon toute norme de codage possible telles que celles bien connues de l'homme du métier. Dans ce mode de réalisation, le terminal utilisateur 4 comprend un lecteur 10 de code barre apte à lire ledit code barre. Le lecteur 10 de code barre peut être un lecteur dédié intégré au terminal utilisateur 4. Alternativement le lecteur 10 peut être un capteur d'image généraliste, tel l'appareil photo d'un téléphone portable. La lecture consiste alors en une prise de photo de l'identifiant graphique. Dans ce cas, le capteur d'image est complété par un module de traitement capable d'analyser la photo obtenue pour en extraire le code barre ou directement le code alphanumérique associé ou tout autre identifiant permettant de reconnaître le TV widget.

Le code barre est un exemple particulier codifié d'identifiant graphique. L'identifiant d'un TV widget 1 peut être toute représentation graphique, logo, symbole graphique ou encore un code alphanumérique, affiché dans la représentation graphique du TV widget 1. Quel que soit le mode de réalisation, le terminal utilisateur 4 comprend un lecteur 10 apte à lire ladite représentation graphique et le cas échéant à l'analyser pour reconnaître le TV widget 1 associé. Selon un mode de réalisation préféré le lecteur 10 est un capteur d'image généraliste. L'appareil photo d'un téléphone portable est un bon exemple d'un tel capteur, avec l'avantage insigne d'être déjà présent lorsque un téléphone portable est employé comme terminal utilisateur 4. Ce capteur générique est avantageusement complété par un module de traitement capable d'analyser l'image obtenue pour en extraire les éléments signifiants permettant de reconnaître et d'identifier le TV widget 1.

Selon un mode de réalisation avantageux l'identifiant graphique est l'apparence standard du TV widget 1. Ce mode de réalisation est avantageux en ce qu'il ne nécessite aucune modification/intervention sur le TV widget 1. Il suppose cependant que la représentation du TV widget soit unique, caractéristique du TV widget 1. Un TV widget 1 modifié par une opération de personnalisation, doit dans ce cas idéalement modifier son apparence en conséquence.

Selon un mode de réalisation alternatif, l'identifiant du TV widget 1 n'est présenté par le moyen d'affichage 2 que sur demande. Ladite présentation nécessite une action du « propriétaire » du TV widget 1 et du moyen d'affichage externe 2. Cette action peut se faire au moyen de l'interface homme machine habituellement utilisée par le propriétaire pour interagir avec le TV widget 1, telle qu'une télécommande du moyen d'affichage 2.

Une telle présentation à la demande présente plusieurs avantages. D'une part, en nécessitant une interaction du propriétaire elle permet de signer un accord du propriétaire à la capture du TV widget 1. D'autre part, elle permet de présenter un identifiant comprenant une information plus ciblée ou plus pertinente au regard de la capture. Ainsi un identifiant sonore est avantageusement présenté uniquement à la demande afin de ne pas surcharger le canal audio. De même un identifiant graphique présenté à la demande peut être plus ciblé en ce qu'il peut afficher uniquement des informations dédiées à l'identification du TV widget 1. Un TV widget 1 modifié par une opération de personnalisation, peut dans ce cas présenter à la demande un identifiant à jour et intégrant les opérations de modification. Enfin une présentation à la demande permet une présentation limitée dans le temps, garantissant une meilleure confidentialité des informations ainsi présentées.

## Revendications

1. Système de capture d'un TV widget (1) présenté sur un moyen d'affichage externe (2), **caractérisé en ce qu'**il comprend un terminal utilisateur (4), un moyen d'affichage utilisateur (3), un réseau de communication (5), une application logicielle (6, 7) apte à :
- lire/capturer un identifiant dudit TV widget (1) présenté sur le moyen d'affichage externe (2),
- identifier la plateforme fournisseur (8) dudit TV widget (1),
- requérir auprès de ladite plateforme fournisseur (8) identifiée le TV widget (1) identifié, et
- rendre disponible ledit TV widget (1) pour le moyen d'affichage utilisateur (3).

2. Système selon la revendication 1, où l'application logicielle (6, 7) comprend une application principale (6) embarquée sur le terminal utilisateur (4) et une application interface (7) embarquée sur le réseau de communication (5) apte à communiquer avec l'application principale (6).

3. Système selon la revendication 1 ou 2, où le terminal utilisateur (4) est un téléphone portable, et où l'application principale (6) et l'application interface (7) communiquent via un réseau téléphonique sans fil (9).

4. Système selon l'une quelconque des revendications 1 à 3, où l'identifiant est un identifiant sonore et où le terminal utilisateur (4) comprend un moyen de lecture (10) sonore apte à lire ledit identifiant sonore.

5. Système selon l'une quelconque des revendications 1 à 3, où l'identifiant est un code barre et où le terminal utilisateur (4) comprend un lecteur (10) de code barre apte à lire ledit code barre.

6. Système selon l'une quelconque des revendications 1 à 3, où l'identifiant est un identifiant graphique et où le terminal utilisateur (4) comprend un moyen de lecture (10) d'image apte à lire ledit identifiant graphique.

7. Système selon la revendication 6, où l'identifiant graphique est l'apparence graphique standard du TV widget (1).

8. Système selon l'une quelconque des revendications 1 à 6, où l'identifiant est un identifiant présenté par le TV widget (1) à la demande.
